(19) Europäisches Patentamt
European Patent Office
Office européen des brevets

(11) **EP 4 257 375 B1**

(12) **EUROPÄISCHE PATENTSCHRIFT**

(45) Veröffentlichungstag und Bekanntmachung des Hinweises auf die Patenterteilung:
**13.11.2024 Patentblatt 2024/46**

(21) Anmeldenummer: **23155146.6**

(22) Anmeldetag: **06.02.2023**

(51) Internationale Patentklassifikation (IPC):
**B60C 11/03** *(2006.01)* **B60C 11/12** *(2006.01)*

(52) Gemeinsame Patentklassifikation (CPC):
**B60C 11/0302; B60C 11/1218;** B60C 2011/0374;
B60C 2011/0388; B60C 2011/1209;
B60C 2011/129; B60C 2011/1295

(54) **FAHRZEUGLUFTREIFEN**

PNEUMATIC TYRE FOR VEHICLES

BANDAGE PNEUMATIQUE POUR VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.03.2022 DE 102022202955**

(43) Veröffentlichungstag der Anmeldung:
**11.10.2023 Patentblatt 2023/41**

(73) Patentinhaber: **Continental Reifen Deutschland GmbH**
**30175 Hannover (DE)**

(72) Erfinder:
• **Fuchs, Artur**
**30165 Hannover (DE)**
• **Brockmann, Jürgen**
**30165 Hannover (DE)**
• **Heinhaupt, Torsten**
**30165 Hannover (DE)**
• **Seng, Matthias**
**30165 Hannover (DE)**
• **Bauer, Claudia**
**30165 Hannover (DE)**

(74) Vertreter: **Continental Corporation**
**c/o Continental AG**
**Intellectual Property**
**Postfach 169**
**30001 Hannover (DE)**

(56) Entgegenhaltungen:
EP-A1- 2 965 925          DE-A1- 102016 217 970
DE-A1- 102019 131 570     JP-A- 2002 264 612
US-A1- 2017 129 289

**Beschreibung**

Die Erfindung betrifft einen Fahrzeugluftreifen mit einem laufrichtungsgebunden ausgeführten Laufstreifen mit V-förmig über die Laufstreifenbreite zueinander verlaufenden Schrägrillen, schulterseitigen Profilblockreihen mit schulterseitigen Profilblöcken, zwei halbmittigen Profilblockreihen mit halbmittigen Profilblöcken und einem zentralen Profilpositivbereich aus

a) Profilblöcken oder
b) einer Profilrippe,

wobei sich der Laufstreifen über seinen Umfang aus 50 bis 60 Pitches zusammensetzt und wobei sich in jedem Pitch ein schulterseitiger Profilblock aus jeder schulterseitigen Profilblockreihe, ein halbmittiger Profilblock aus jeder halbmittigen Profilblockreihe und ein Abschnitt des zentralen Profilpositivbereiches befindet, wobei sämtliche Profilblöcke jeweils mit zumindest einem oder mehreren parallel zueinander verlaufenden Einschnitt(en) und die gegebenenfalls vorgesehene Profilrippe mit mehreren parallel zueinander verlaufenden Einschnitt(en) versehen ist bzw. sind, wobei die Einschnitte eine Breite von 0,4 mm bis 2,0 mm und eine maximale Tiefe von zumindest 3,0 mm und höchstens 100% der Profiltiefe aufweisen, wobei folgende Beziehungen gelten:

$$E_Z > E_{HB} \qquad \text{Beziehung 1}$$

$$E_Z > E_S \qquad \text{Beziehung 2}$$

wobei

$E_Z$ die Anzahl der Einschnitte im zentralen Profilpositivbereich,
$E_{HB}$ die Anzahl der Einschnitte in jeder einzelnen halbmittigen Profilblockreihe und
$E_S$ die Anzahl der Einschnitte in jeder einzelnen schulterseitigen Profilblockreihe ist.

Die Erfindung betrifft ferner einen Fahrzeugluftreifen gemäß dem Oberbegriff des unabhängigen Anspruches 2.
Ein derartiger Fahrzeugluftreifen ist beispielsweise aus der EP 2 965 925 A1 bekannt. Der Reifen weist einen Laufstreifen mit V-förmig über die Laufstreifenbreite verlaufenden Schrägrillen auf, welche zwei schulterseitige Profilblockreihen mit schulterseitigen Profilblöcken, zwei halbmittige Profilblockreihen mit halbmittigen Profilblöcken und einen zentralen Laufstreifenbereich mit mittigen Profilblöcken mitbegrenzen. In den Pitches mit der größten Umfangslänge sind die schulterseitigen Profilblöcke jeweils mit einem rillenartigen Einschnitt versehen, welcher den zugehörigen schulterseitigen Profiblock im Verhältnis 1:1 bis 2:3 teilt. Ferner sind sämtliche Profilblöcke mit parallel zueinander verlaufenen Einschnitten mit einer Breite von 0,4 mm bis 0,6 mm versehen. Der Laufstreifen umfasst über seinen Umfang 50 bis 90 Pitches. Die schulterseitigen Profilblöcke weisen eine weitgehend gleichmäßige Umfangs- und Quersteifigkeit auf, wodurch Vorteile bei den Bremseigenschaften und beim Abriebverhalten erzielt werden.
Weitere Fahrzeugluftreifen mit laufrichtungsgebunden ausgeführten Laufstreifen mit V-förmig über die Laufstreifenbreite zueinander verlaufenden Schrägrillen sind aus US 2017/129289 A1, JP 2002 264612 A, DE 10 2016 217970 A1, sowie DE 10 2019 131570 A1 bekannt.
Fahrzeugluftreifen der eingangs genannten Art können sich -je nach Profilgestaltung - insbesondere auch für den Ganzjahreseinsatz eigenen. Bei Ganzjahresreifen ist es von entscheidender Bedeutung, dass sowohl gute Fahreigenschaften auf trockener Fahrbahn als auch gute Fahreigenschaften auf schneebedeckter Fahrbahn sichergestellt sind. Aktuell werden wintertaugliche Reifen mit dem 3PMSF-Symbol (Three Peak Mountain Snow Flake) an der Seitenwand versehen, welches aktuell das einzige Symbol ist, das die Wintereigenschaften des Reifens auch tatsächlich bestätigt und zukünftig die M+S-Kennzeichnung ersetzen soll. Das 3PMSF-Symbol garantiert, dass der Reifen einem standardisierten Test der zuständigen Behörde der EU unterzogen wurde und für den Einsatz unter schwierigen Wetterverhältnissen geeignet ist.
Der Erfindung liegt die Aufgabe zugrunde, bei einem Fahrzeugluftreifen der eingangs genannten Art gute Fahreigenschaften auf trockener Fahrbahn und auf schneebedeckter Fahrbahn sicherzustellen, insbesondere derart, dass sich der Reifen für den Ganzjahreseinsatz eignet und die 3PMSF-Kennzeichnung erhalten kann.
Bei einem Fahrzeugluftreifen gemäß Anspruch 1 wird die gestellte Aufgabe erfindungsgemäß dadurch gelöst,

dass die Pitches eine mittlere Umfangslänge von 33,0 mm bis 40,0 mm aufweisen, die Einschnitte in den halbmittigen Profilblöcken in Draufsicht parallel zu den Schrägrillen verlaufen,

bei Variante a) die Einschnitte in den Profilblöcken in Draufsicht parallel zu den Rillenmittellinien der Schrägrillen verlaufen und

bei Variante b) die Einschnitte in der Profilrippe in Draufsicht parallel zueinander verlaufen, wobei für Variante a) und b) folgende Beziehung gilt:

$$E_{Z,Mittel} = E_Z / PB_S = 2,0 \text{ bis } 4,0 \qquad \text{Beziehung 4}$$

wobei

$PB_S$ die Anzahl der schulterseitigen Profilblöcke jeder einzelnen schulterseitigen Profilblockreihe ist.

Bei einem Fahrzeugluftreifen gemäß dem unabhängigen Anspruch 2 wird die gestellte Aufgabe erfindungsgemäß dadurch gelöst,

dass die Pitches eine mittlere Umfangslänge von 33,0 mm bis 40,0 mm aufweisen, der zentrale Profilpositivbereich aus einer Profilrippe gebildet ist, die Einschnitte in den halbmittigen Profilblöcken in Draufsicht parallel zu den Schrägrillen verlaufen und die Einschnitte in der Profilrippe V-förmig zueinander verlaufend ineinander einmünden, wobei folgende Beziehungen gelten:

$$E_Z^* > E_{HB} \qquad \text{Beziehung 1*}$$

$$E_Z^* > E_S \qquad \text{Beziehung 2*}$$

$$E_Z^* = \sum c_E / b_{BR} \qquad \text{Beziehung 7}$$

$$E_{Z,Mittel} = E_Z^* / PB_S = 2,0 \text{ bis } 4,0 \qquad \text{Beziehung 4*}$$

wobei

$E_{HB}$ die Anzahl der Einschnitte in jeder einzelnen halbmittigen Profilblockreihe,
$E_S$ die Anzahl der Einschnitte in jeder einzelnen schulterseitigen Profilblockreihe,
$\sum c_E$ die Summe der in die axiale Richtung projizierten Längen sämtlicher Einschnitte in der Profilrippe,
$E_Z^*$ eine errechnete, fiktive Anzahl von die Profilrippe durchquerenden Einschnitten,
$b_{BR}$ die in axialer Richtung ermittelte, maximale Breite der Profilrippe und
$PB_S$ die Anzahl der schulterseitigen Profilblöcke jeder einzelnen schulterseitigen Profilblockreihe ist.

Die Erfindung umfasst somit zwei Alternativlösungen, wobei der zentrale Profilpositivbereich bei der ersten Lösung von speziell gestalteten Profilböcken und bei der zweiten Lösung von einer speziell gestalteten Profilrippe gebildet ist. Die allgemeine erfinderische Idee liegt im kombinierten Einsatz einer bestimmten mittleren Umfangslänge für die Pitches, parallel zu den Schrägrillen verlaufenden Einschnitten und den Beziehungen 4 und 4*, welche ein spezielles Verhältnis der Anzahl der Einschnitte im zentralen Profilpositivbereich zur Anzahl der schulterseitigen Profilblöcke definieren. Der Wert $E_{Z,Mittel}$ ist der arithmetische Mittelwert der Anzahl der Einschnitte im zentralen Profilpositivbereich Z bezogen auf die Anzahl schulterseitiger Profilblöcke. Durch diese Maßnahmen weist der Laufstreifen eine für Fahreigenschaften auf trockener Fahrbahn und auf schneebedeckter Fahrbahn vorteilhafte ausgewogene Stabilität auf, wobei vor allem der zentrale Profilpositivbereich diesbezüglich vorteilhaft gestaltet ist.
Gemäß einer bevorzugten Ausführung gilt folgende Beziehung:

$$E_S > E_{HB} \qquad \text{Beziehung 3}$$

wobei

$E_{HB}$ die Anzahl der Einschnitte in jeder einzelnen halbmittigen Profilblockreihe und
$E_S$ die Anzahl der Einschnitte in jeder einzelnen schulterseitigen Profilblockreihe ist.

Diese Maßnahme ist vor allem beim Fahren auf schneebedeckter Fahrbahn, insbesondere bei tieferem Schnee, besonders günstig. Bei solchen Bedingungen tragen die in den schulterseitigen Profilblöcken befindlichen Einschnitte verstärkt zu den Griffeigenschaften bei. Die geringe Anzahl der Einschnitte in den halbmittigen Profilblockreihen sorgt dafür, dass eine für die Fahreigenschaften auf trockener Fahrbahn besonders günstige Steifigkeit in den halbmittigen Profilblöcke erhalten bleibt.

Bei einer weiteren bevorzugten Ausführung gilt folgende Beziehung:

$$E_{S,Mittel} = E_S / PB_S = 2{,}2 \text{ bis } 2{,}8 \qquad \text{Beziehung 5}$$

wobei

$E_S$ die Anzahl der Einschnitte in jeder einzelnen schulterseitigen Profilblockreihe und
$PB_S$ die Anzahl der schulterseitigen Profilblöcke jeder einzelnen schulterseitigen Profilblockreihe ist.

Diese Beziehung ist vor allem für den Schneegriff von Vorteil.

Bei einer weiteren bevorzugten Ausführung gilt folgende Beziehung:

$$E_{HB,Mittel} = E_{HB} / PB_S = 1{,}2 \text{ bis } 2{,}0 \qquad \text{Beziehung 6}$$

wobei

$E_{HB}$ die Anzahl der Einschnitte in jeder einzelnen halbmittigen Profilblockreihe und
$PB_S$ die Anzahl der schulterseitigen Profilblöcke jeder einzelnen schulterseitigen Profilblockreihe ist.

Entsprechende Werte aus dieser Beziehung sorgen für eine besonders ausgewogene Verbesserung der Fahreigenschaften auf trockener Fahrbahn und auf schneebedeckter Fahrbahn, insbesondere im Hinblick auf die Bremseigenschaften.

Gemäß einer weiteren bevorzugten Ausführung gilt folgende Beziehung:
$E_{Z,Mittel} = 2{,}2 \text{ bis } 3{,}8$, bevorzugt $2{,}4$ bis $3{,}6$

Entsprechende Werte aus dieser Beziehung sind ebenfalls für die Fahreigenschaften auf trockener Fahrbahn und auf schneebedeckter Fahrbahn vorteilhaft, wobei zusätzlich ein besonders gleichmäßiger Laufstreifenabrieb sichergestellt ist.

Eine weitere bevorzugte Ausführung besteht darin, dass jeweils in Pitches mit der kleinsten Umfangslänge in jedem halbmittigen Profilblock genau ein Einschnitt ausgebildet ist und jedem schulterseitigen Profilblock zwei Einschnitte ausgebildet sind. Diese Maßnahme hat sich insbesondere als vorteilhaft für die Steifigkeit der Profilblöcke erwiesen und ist vor allem für die Fahreigenschaften auf trockener Fahrbahn günstig.

Ferner ist es bevorzugt, wenn jeweils in Pitches mit der größten Umfangslänge in jedem halbmittigen Profilblock zwei Einschnitte und in jedem schulterseitigen Profilblock drei Einschnitte ausgebildet sind. Dies ist vor allem für den Schneegriff von weiterem Vorteil.

Eine weitere bevorzugte Ausführung ist, dadurch gekennzeichnet, dass zu den Einschnitten Einschnitte gehören, welche eine maximale Tiefe von 70% bis 100% der Profiltiefe, einen Einschnittgrund und zwei Einschnittwände mit zumindest einer zur Laufstreifenperipherie beabstandeten lokalen Verkeilungsstruktur aufweisen, wobei die Verkeilungsstruktur durch zwei einander gegenüberliegende, korrespondierende, durchgehend gekrümmte Wandabschnitte der Einschnittwände gebildet ist und wobei unstrukturierte Flächen der Einschnittwände an die durchgehend gekrümmten Wandabschnitte angrenzen, wobei die Verkeilungsstruktur kreissegmentförmig, insbesondere halbkreisförmig, ausgeführt ist und sich aus einer kuppelförmig ausgebauchten, inneren Strukturzone und einer diese U-förmig umlaufenden, entgegengesetzt zur inneren Strukturzone ausgebauchten, äußeren Strukturzone mit zur Laufstreifenperipherie weisenden U-Schenkel zusammensetzt, sodass der durchgehend gekrümmte Wandabschnitt der einen Einschnittwand einen U-förmigen Vorsprung und der durchgehend gekrümmte Wandabschnitt der anderen Einschnittwand einen in den U-förmigen Vorsprung hineinragenden kuppelförmigen Vorsprung mitbegrenzt.

Die Verkeilungsstruktur weist gegenüber bisher bekannten Verkeilungsstrukturen in der Längserstreckung des Einschnittes eine bessere Verkeilungswirkung auf, wodurch die Profilblöcke besonders wirkungsvoll stabilisiert und in der Folge die Kraftübertragung bei Lenk-, Brems- und Traktionsvorgängen verbessert ist. Mit fortschreitendem Laufstreifenabrieb tritt die Verkeilungsstruktur mehr in Richtung zur Peripherie des Laufstreifens. Dabei werden einerseits an der Verkeilungsstruktur ausgebildete, ausgeprägt gewellt verlaufende Griffkanten nahe bei oder an der Laufstreifenperipherie zur Verfügung gestellt, welche eine hohe abgewickelte Kantenlänge aufweisen und den mit zunehmendem Laufstreifenabrieb abnehmenden Traktionseigenschaften auf Schnee wirkungsvoll entgegenwirken, wodurch die Traktionseigenschaften auf hohem Niveau gehalten werden. Anderseits verbessert die nun bis zu Laufstreifenperipherie reichende U-förmig umlaufende äußere Strukturzone - bedingt durch ihre U-Form - beim Fahren auf nasser Fahrbahn die Entwässrung der Außenfläche der Profilpositive, was für die Nassgriffeigenschaften von Vorteil ist. Die Verkeilungsstruktur zeigt daher einen doppelten Effekt, verbessert zum einen bei neuem bzw. wenig abgeriebenen Laufstreifen die Kraftübertragung auf den Untergrund und trägt zum anderen bei entsprechend abgeriebenem Laufstreifen zur Aufrechterhaltung einer guten Schnee- und Nässeperformance bei.

Weitere Merkmale, Vorteile und Einzelheiten der Erfindung werden nun anhand der Zeichnung, die schematisch Ausführungsbeispiele der Erfindung zeigt, näher erläutert. Dabei zeigen

Fig. 1 eine Draufsicht auf eine Teilabwicklung eines Laufstreifens eines Fahrzeugluftreifens mit einer ersten Ausführungsvariante der Erfindung,

Fig. 2 eine Draufsicht auf eine Teilabwicklung eines Laufstreifens eines Fahrzeugluftreifens mit einer zweiten Ausführungsvariante der Erfindung,

Fig. 3 eine Draufsicht auf einen Umfangsabschnitt einer mittigen Profilrippe,

Fig. 4 eine vergrößerte Visualisierung eines Einschnittes (Abzugskörper des Einschnittes),

Fig. 5 eine Frontansicht auf die Visualisierung des Einschnittes gemäß der in Fig. 4 durch den Pfeil $S_5$ angedeuteten Sichtrichtung,

Fig. 6 einen vergrößerten Schnitt durch den Einschnitt gemäß der Linie VI-VI in Fig. 5 mit an den Einschnitt angrenzendem Gummimaterial eines Profilblockes und

Fig. 7 einen vergrößerten Schnitt analog zur Fig. 6 gemäß der Linie VII-VII der Fig. 5.

Gemäß der Erfindung ausgeführte Fahrzeugluftreifen sind Reifen für Kraftfahrzeuge, insbesondere für mehrspurige Kraftfahrzeuge, sowie vorzugsweise Reifen in Radialbauart für Personenkraftwagen, Vans oder Light-Trucks (Kleintransporter mit zGM ≤ 3,5 t, Leichte LKWs mit zGM ≤ 7,5 t), wobei die Reifen insbesondere für den Ganzjahreseinsatz vorgesehen sind.

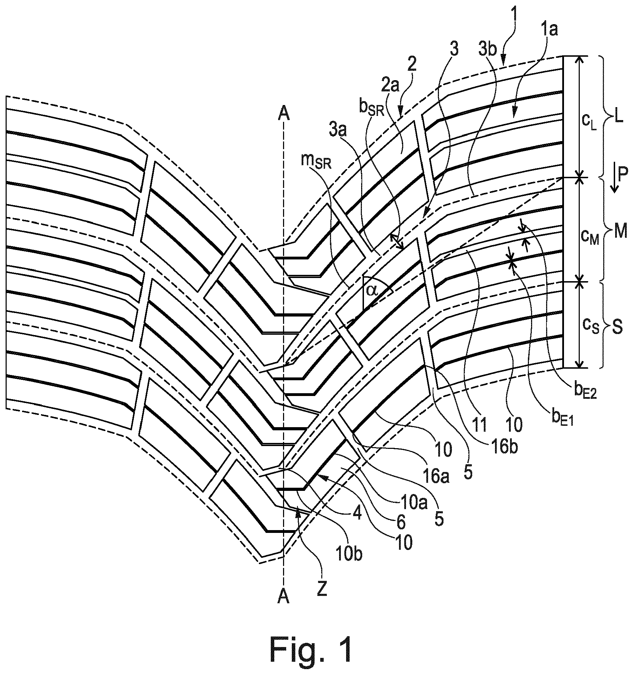

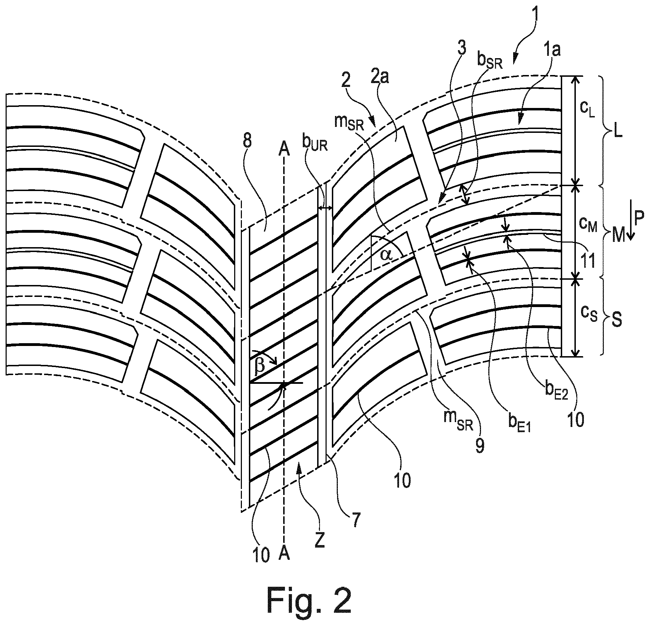

Fig. 1 und Fig. 2 zeigen je eine Draufsicht auf eine Teilabwicklung eines Laufstreifens eines Fahrzeugluftreifens. Der Laufstreifen ist laufrichtungsgebunden ausgeführt, wobei der Fahrzeugluftreifen derart auf der Achse eines Fahrzeuges zu montieren ist, dass er die in durch den Pfeil P angedeutete Abrollrichtung bei Vorwärtsfahrt aufweist. Die Reifenäquatorialebene ist durch eine Linie A-A gekennzeichnet.

Der Laufstreifen ist gemäß einem Verfahren der Pitchlängenvariation geräuschoptimiert und setzt sich aus 50 bis 60 in Umfangsrichtung aufeinanderfolgenden Pitches (gleichartig gestaltete Profilabschnitte) zusammen, wobei beim Ausführungsbeispiel Pitches L, M, S mit drei unterschiedlichen Umfangslängen $c_L$, $c_M$, es vorgesehen sind und wobei Pitches L die größte Umfangslänge $c_L$, Pitches M eine mittlere Umfangslänge $c_M$ und Pitches S die kleinste Umfangslänge cs aufweisen. Das Verhältnis der drei Umfangslängen $c_L$ : $c_M$ : cs beträgt beispielsweise 1,4 : 1,2 : 1. Die Pitches L, M, S weisen eine mittlere Umfangslänge von 33,0 mm bis 40,0 mm auf, wobei die mittlere Umfangslänge dem arithmetischen Mittelwert aus den Umfangslängen sämtlicher Pitches entspricht.

Der Laufstreifen weist zwei schulterseitige Profilblockreihen 1 mit schulterseitigen Profilblöcken 1a, zwei halbmittige Profilblockreihen 2 mit halbmittigen Profilblöcken 2a und einen zwischen den halbmittigen Profilblockreihen 2 befindlichen von der Reifenäquatorialebene (Linie A-A) geschnittenen, zentralen Profilpositivbereich Z auf.

Der Laufstreifen weist in jeder Laufstreifenhälfte Schrägrillen 3 mit Rillenmittellinien $m_{SR}$ auf, wobei die Schrägrillen 3 über einen Großteil ihrer Erstreckung auf die jeweils vorgesehene Profiltiefe von üblicherweise 6,5 mm bis 9,0 mm ausgeführt sind, an der Laufstreifenperipherie eine in Draufsicht senkrecht zur Rillenmittellinie $m_{SR}$ ermittelte Breite $b_{SR}$ 2,0 mm bis 12,0 mm aufweisen, in Draufsicht betrachtet, V-förmig über die Laufstreifenbreite und - bezogen auf die Rillenmittellinien $m_{SR}$ - in jeder Laufstreifenhälfte parallel zueinander sowie bezüglich einer die Enden der jeweiligen Rillenmittellinie $m_{SR}$ verbindenden geraden Linie zur Umfangsrichtung unter einem Winkel $\alpha$ von 45° bis 75°, bevorzugt von 50° bis 70°, verlaufen. An ihrer breitesten Stelle weisen Schrägrillen 3 jeweils zumindest eine Breite von zumindest 4,0 mm, bevorzugt zumindest 6,0 mm, auf. Die in unterschiedlichen Laufstreifenhälften befindlichen Schrägrillen 3 sind in Umfangsrichtung zueinander versetzt. "Senkrecht zur Rillenmittellinie $m_{SR}$ ermittelt" bedeutet bei bogenförmig verlaufenden Schrägrillen 3, dass die Ermittlung senkrecht zu einer an die jeweilige Stelle der Rillenmittellinie $m_{SR}$ angelegten Tangente erfolgt. Die Abrollrichtung bei Vorwärtsfahrt ist derart, dass die Schrägrillen 3 zuerst mit ihren laufstreifeninnenseitigen Enden in die Bodenaufstandsfläche eintreten.

Bei der in Fig. 1 gezeigten Ausführung enden die Schrägrillen 3 laufstreifeninnenseitig vor der entsprechenden Schrägrille 3 aus der jeweils anderen Laufstreifenhälfte sowie in einem auf die jeweilige Rillenmittellinie m$_{SR}$ bezogenen, relativ zur Reifenäquatorialebene (Linie A-A) in axialer Richtung ermittelten Abstand von bis zu 5,0 mm, bevorzugt von bis zu 3,0 mm. Jede Schrägrille 3 setzt sich, in Draufsicht betrachtet, aus einem laufstreifeninnenseitigen Schrägrillenabschnitt 3a und einem gegenüber diesem stärker zur Umfangsrichtung geneigt verlaufenden, laufstreifenaußenseitigen Schrägrillenabschnitt 3b zusammen. An das laufstreifeninnenseitige Ende jeder Schrägrille 3 schließt eine schmale Rille 4 an, welche in die jeweilige in der anderen Laufstreifenhälfte verlaufende Schrägrille 3 einmündet. Zwischen in Umfangsrichtung benachbarten Schrägrillen 3 verlaufen jeweils zwei bezüglich der Umfangsrichtung gegensinnig zu den laufstreifeninnenseitigen Schrägrillenabschnitt 3a geneigte Kurzrillen 5 mit einer Breite von 2,2 mm bis 3,0 mm und einer in radialer Richtung ermittelten Tiefe von 50% bis 100%, insbesondere von höchstens 75%, der Profiltiefe, wobei die weiter laufstreifenaußenseitig verlaufenden Kurzrillen 5 die schulterseitigen Profilblöcke 1a von den halbmittigen Profilblöcken 2a und wobei die weiter laufstreifeninnenseitig verlaufenden Kurzrillen 5 die halbmittigen Profilblöcke 2a von den zentralen Profilpositivbereich Z bildenden, jeweils von der Reifenäquatorialebene A-A geschnittenen, mittigen Profilblöcke 6 trennen.

Bei der in Fig. 2 gezeigten Ausführung verlaufen die Schrägrillen 3, in Draufsicht betrachtet, bogenförmig, wobei die Schrägrillen 3 aus derselben Laufstreifenhälfte jeweils in eine in Draufsicht gerade verlaufende, auf Profiltiefe ausgeführte Umfangsrille 7 mit einer in axialer Richtung ermitteln Breite b$_{UR}$ von 4,0 mm bis 12,0 mm, insbesondere von bis zu 10,0 mm, einmünden. Die Umfangsrillen 7 begrenzen eine von der Reifenäquatorialebene (Linie A-A) geschnittene, insbesondere halbierte, den zentralen Profilpositivbereich Z bildende, mittige Profilrippe 8 und trennen diese von den halbmittigen Profilblöcken 2a. Zwischen in Umfangsrichtung benachbarten Schrägrillen 3 verläuft jeweils eine Kurzrille 9 mit einer Breite von 2,5 mm bis 5,0 mm und einer in radialer Richtung ermittelten Tiefe von 50% bis 100%, insbesondere von zumindest 75%, der Profiltiefe, wobei die Kurzrillen 9 bezüglich der Umfangsrichtung gegensinnig zu den Schrägrillen 3 geneigt sind und die schulterseitigen Profilblöcke 1a von den halbmittigen Profilblöcken 2a trennen.

Wie Fig. 1 und Fig. 2 zeigen, umfasst jeder Pitch L, M, S einen von den Schrägrillen 3 begrenzten, in Draufsicht im Wesentlichen V-förmigen Profilabschnitt, zu welchem zwei schulterseitige Profilblöcke 1a, zwei halbmittige Profilblöcke 2a und - bei der Ausführung in Fig. 1 - zwei mittige Profilblöcke 6 und - bei der Ausführung in Fig. 2 - ein in Draufsicht parallelogrammförmiger Umfangsabschnitt der mittigen Profilrippe 8 gehören.

Jeder im Pitch S befindliche schulterseitige Profilblock 1a ist ausschließlich mit zwei Einschnitten 10 versehen und jeder in einem Pitch M, L befindliche schulterseitige Profilblock 1a ist mit zwei Einschnitten 10 und einem im Bereich zwischen den zwei Einschnitten 10 verlaufenden Einschnitt 11 versehen. Die Einschnitte 10, 11 durchqueren die schulterseitigen Profilblöcke 1a in Längserstreckung, verlaufen in Draufsicht parallel zu den Rillenmittellinien m$_{SR}$ der Schrägrillen 3 und weisen in radialer Richtung jeweils maximale Tiefe (Tiefe an der jeweils tiefsten Stelle) von zumindest 3,0 mm und höchstens 100%, insbesondere von höchstens 95%, der Profiltiefe auf. Die Einschnitte 10 weisen eine konstante Breite b$_E$ von 0,4 mm bis 1,2 mm, insbesondere von bis zu 0,8 mm, auf. Die Einschnitte 11 weisen eine Breite b$_E$' von 0,8 mm bis 2,0 mm, insbesondere von zumindest 1,0 mm, auf, wobei die Breite b$_E$' insbesondere um zumindest 0,2 mm größer ist als die Breite b$_E$ der Einschnitte 10.

Jeder in einem Pitch S befindliche halbmittige Profilblock 2a ist mit einem einzigen Einschnitt 10 und jeder in einem Pitch M, L befindliche halbmittige Profilblock 2a ist mit zwei Einschnitten 10 versehen. Die Einschnitte 10 in den halbmittigen Profilblöcken 2a sind analog zu den Einschnitten 10 in den schulterseitigen Profilblöcken 1a ausgeführt.

Bei der in Fig. 1 gezeigten Ausführung ist jeder in einem Pitch S befindliche mittige Profilblock 6 mit einem einzigen Einschnitt 10 versehen und es ist jeder in einem Pitch M, L befindliche mittige Profilblock 6 mit zwei Einschnitten 10 versehen, wobei die Einschnitte 10 die mittigen Profilblöcke 6 durchqueren, sich diese Einschnitte 10, in Draufsicht betrachtet, aus einem in die entsprechend Kurzrille 5 einmündenden, den Großteil des Einschnittes 10 einnehmenden, parallel zu den Rillenmittellinien m$_{SR}$ der angrenzenden Schrägrillen 3 verlaufenden, laufstreifenaußenseitigen Einschnittabschnitt 10a und einem zur axialen Richtung unter einem Winkel von 0° bis 2° verlaufenden in eine Schrägrille 3 einmündenden, laufstreifeninnenseitigen Einschnittabschnitt 10b zusammensetzen.

Bei der in Fig. 2 gezeigten Ausführung ist die mittige Profilrippe 8 mit Einschnitten 10 versehen, welche, in Draufsicht betrachtet, gerade sowie zur axialen Richtung unter einem Winkel β von 20° bis 30° verlaufen. Die Pitchgrenzen verlaufen im Bereich der mittigen Profilrippe 8 in Draufsicht parallel zu den Einschnitten 10.

Sowohl bei der in Fig. 1 als auch bei der in Fig. 2 gezeigten Ausführung gelten folgende Beziehungen:

$$E_Z > E_{HB} \qquad \text{Beziehung 1}$$

$$E_Z > E_S \qquad \text{Beziehung 2}$$

$$E_S > E_{HB} \qquad \text{Beziehung 3}$$

wobei

$E_Z$ die Anzahl der Einschnitte 10 im zentralen Profilpositivbereich Z,
$E_{HB}$ die Anzahl der Einschnitte 10 in jeder einzelnen halbmittigen Profilblockreihe 2 und
$E_S$ die Anzahl der Einschnitte 10, 11 in jeder einzelnen schulterseitigen Profilblockreihe 1
ist.

Wie sich aus der obigen Beschreibung ergibt, stimmt die Anzahl der Einschnitte 10 in der einen halbmittigen Profilblockreihe 2 mit der Anzahl der Einschnitte 10 in der anderen halbmittigen Profilblockreihe 2 überein. Gleiches gilt für die Anzahl der Einschnitte 10, 11 in den beiden schulterseitigen Profilblockreihen 1.

Ferner gilt folgende Beziehung:

$$E_{Z,\text{Mittel}} = E_Z / PB_S = 2{,}0 \text{ bis } 4{,}0, \text{ insbesondere } 2{,}2 \text{ bis } 3{,}8, \text{ bevorzugt } 2{,}4 \text{ bis } 3{,}6$$

$$\text{Beziehung 4}$$

wobei

$PB_S$ die Anzahl der schulterseitigen Profilblöcke 1a in jeder einzelnen schulterseitigen Profilblockreihe 1 ist.

Wie sich aus der obigen Beschreibung ergibt, stimmt die Anzahl der schulterseitigen Profilblöcke 1a in der einen schulterseitigen Profilblockreihe 1 mit der Anzahl der schulterseitigen Profilblöcke 1a in der einen schulterseitigen Profilblockreihe 1 überein.

Darüber hinaus gelten bevorzugt folgende Beziehungen unabhängig voneinander:

$$E_{S,\text{Mittel}} = E_S / PB_S = 2{,}2 \text{ bis } 2{,}8 \qquad \text{Beziehung 5}$$

$$E_{HB,\text{Mittel}} = E_{HB} / PB_S = 1{,}2 \text{ bis } 2{,}0 \qquad \text{Beziehung 6}$$

Bevorzugt gelten die Beziehungen 5 und 6 in Kombination miteinander.

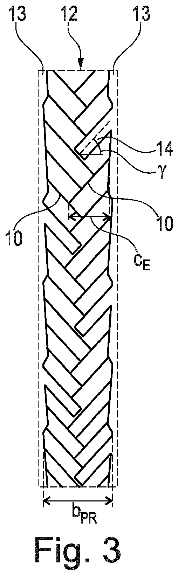

Fig. 3 zeigt eine Draufsicht auf einen Umfangsabschnitt einer bandförmig ausgeführten, mittigen Profilrippe 12, welche eine Variante der in Fig. 2 gezeigten mittigen Profilrippe 8 ist und welche seitlich von sägezahnartig verlaufenden Umfangsrillen 13 begrenzt ist. Die mittige Profilrippe 12 weist eine an der Laufstreifenperipherie ermittelte, in die axiale Richtung projizierte maximale Breite $b_{PR}$ (Breite an einer der breitesten Stellen) auf und ist mit von den Umfangsrillen 13 ausgehenden Sackrillen 14 versehen, welche, in Draufsicht betrachtet, gerade sowie zur axialen Richtung unter einem Winkel $\gamma$ von 40° bis 50° verlaufen, wobei die von der einen Umfangsrille 13 ausgehenden Sackrillen 14 zu den von der anderen Umfangsrille 13 ausgehenden Sackrillen 14 in Umfangsrichtung versetzt und bezüglich der Umfangsrichtung gegensinnig geneigt sind. Die Sackrillen 14 weisen eine in Draufsicht senkrecht zur Rillenerstreckung ermittelte Breite von 2,5 mm bis 6,0 mm und in radialer Richtung eine Tiefe von 50% bis 100%, insbesondere von höchstens 75%, der Profiltiefe auf. Ferner sind in der mittigen Profilrippe 12 Einschnitte 10 ausgebildet, wobei jeder Einschnitt 10 von einer der Umfangsrillen 13 ausgeht und im Inneren der Profilrippe 12 entweder in einen von der jeweils anderen Umfangsrille 13 ausgehenden Einschnitt 10 oder in eine von der jeweils anderen Umfangsrille 13 ausgehende Sackrille 14 einmündet. Zwischen in Umfangsrichtung aufeinanderfolgenden, von derselben Umfangsrille 13 ausgehenden Sackrillen 14 sind jeweils fünf Einschnitte 10 ausgebildet, sodass die Einschnitte 10 ein gepfeiltes Einschnittmuster bilden. Jeder Einschnitt 10 weist eine auf die in Draufsicht dem Einschnittverlauf folgende Einschnittmittellinie $m_E$ bezogene, in die axiale Richtung projizierte Länge $c_E$ auf.

Für die mittige Profilrippe 12 gelten die Beziehungen 1, 2 und 4 in einer angepassten Form, wobei $E_Z$ durch $E_Z^*$ zu ersetzen ist. Es gilt:

$$E_Z^* = \sum c_E / b_{BR} \qquad \text{Beziehung 7}$$

wobei

Ez* eine errechnete, fiktive Anzahl von die mittige Profilrippe 12 durchquerenden Einschnitten,

$\Sigma c_E$ die Summe der in die axiale Richtung projizierten Längen $c_E$ sämtlicher Einschnitte 10 in der mittigen Profilrippe 12 und

$b_{BR}$ die in die axiale Richtung projizierte maximale Breite der mittigen Profilrippe 12 ist.

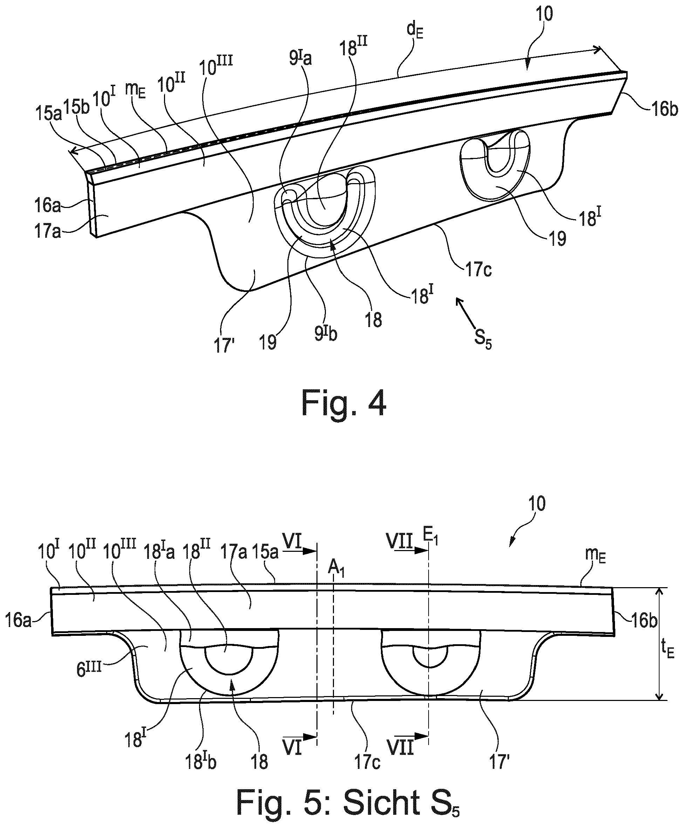

Fig. 4 bis Fig. 7 zeigen eine bevorzugte Ausführung eines Einschnittes 10, wobei ein in einem mittelten Profilblock 2 gemäß Fig. 1 ausgebildeter Einschnitte 10 gezeigt ist.

Der Einschnitt 10 weist an der Laufstreifenperipherie eine beim Abrollen des Reifens bei Vorwärtsfahrt (Fig. 1: Pfeil P) zuerst in den Untergrund eintretende, einlaufende Einschnittkante 15a (Fig. 4) und eine auslaufende Einschnittkante 15b (Fig. 4) sowie ein beim Abrollen des Reifens bei Vorwärtsfahrt zuerst in den Untergrund eintretendes, laufstreifeninnenseitiges, einlaufendes Einschnittende 16a und ein laufstreifenaußenseitiges, auslaufendes Einschnittende 16b (vergl. Fig. 1) auf. Beim Abrollen des Reifens bei Vorwärtsfahrt treten auf der einlaufenden Einschnittkante 15a liegende Punkte jeweils vor dem exakt in Umfangsrichtung gegenüberliegenden, auf der auslaufenden Einschnittkante 15b liegenden Punkt in den Untergrund ein.

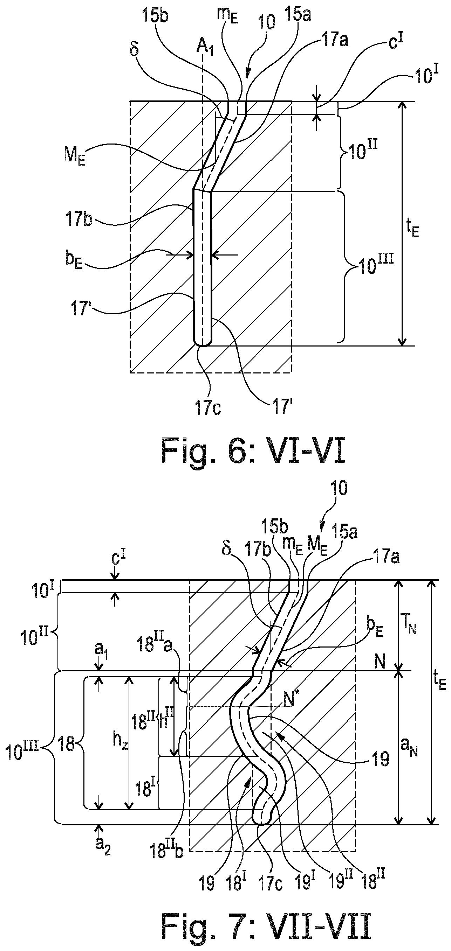

Wie Fig. 4 bis Fig. 7 in Kombination zeigen, ist der Einschnitt 10 durch eine von der Einschnittkante 15a ausgehende Einschnittwand 17a, eine von der Einschnittkante 15b ausgehende Einschnittwand 17b (Fig. 6, Fig. 7) sowie einen Einschnittgrund 17c begrenzt und weist eine in Draufsicht dem Einschnittverlauf folgende Einschnittmittellinie $m_E$ (in Fig. 4 angedeutet), eine von der Einschnittmittellinie $m_E$ ausgehende, zu den Einschnittwänden 17a, 17b übereinstimmend beabstandete Einschnittmittelfläche $M_E$ (Fig. 6, Fig. 7), eine an der Laufstreifenperipherie entlang der Einschnittmittellinie $m_E$ ermittelte Länge $d_E$ (in Fig. 4 andeutet), die bereits erwähnte konstante Breite $b_E$ (Fig. 6, Fig. 7) und zumindest über den Großteil seiner Länge $d_E$ eine in radialer Richtung ermittelte maximale Tiefe $t_E$ (Tiefe an der jeweils tiefsten Stelle, Fig. 5 bis Fig. 7) von 70% bis 100%, insbesondere von höchstens 95%, der Profiltiefe auf. Die angegebene Größe der maximalen Tiefe $t_\varepsilon$ ist dabei eine für diese bevorzugte Ausführung des Einschnittes 10 vorgesehene maximal Tiefe (vergl. im Zusammenhang mit Fig. 1 und Fig. 2 angegebene "allgemeine" maximale Tiefe von 50% bis 100%, insbesondere von zumindest 75%, der Profiltiefe).

Gemäß Fig. 5 verläuft der Einschnittgrund 17c auf der maximalen Tiefe $t_\varepsilon$ und erstreckt sich zumindest über den Großteil der Länge $d_E$ (Fig 4), bevorzugt über zumindest 60% der Länge $d_E$ (Fig. 4), und endet beim gezeigten Ausführungsbeispiel an seichter ausgeführten, randseitigen Einschnittbereichen.

Gemäß Fig. 4 und Fig. 5 setzt sich der Einschnitt 10 in jenem Bereich, in welchem er auf die maximale Tiefe $t_E$ (Fig. 5) reicht, in radialer Richtung aus einem radial äußeren Einschnittabschnitt $10^I$, einem radial mittleren Einschnittabschnitt $10^{II}$ und einem radial inneren Einschnittabschnitt $10^{III}$ zusammen.

Wie Fig. 6 und Fig. 7 zeigen, verläuft der radial äußere Einschnittabschnitt $10^I$, im in Draufsicht senkrecht zur Einschnittmittellinie $m_E$ (Fig. 4) ausgerichteten Querschnitt betrachtet, in radialer Richtung und weist eine auf die Einschnittmittelfläche $M_\varepsilon$ bezogene, in radialer Richtung ermittelte Länge $c^I$ von 0,5 mm bis 1,5 mm auf. Der radial mittlere Einschnittabschnitt $10^{II}$ verläuft, im erwähnten Querschnitt betrachtet, gerade sowie zur radialen Richtung unter einem Winkel $\delta$ von 15° bis 35°, insbesondere von 20° bis 30°.

Gemäß Fig. 4 und Fig. 5 weist der radial innere Einschnittabschnitt $10^{III}$ zwei lokale Verkeilungsstrukturen 18 auf. Wie Fig. 6 zeigt, verläuft der radial innere Einschnittabschnitt $10^{III}$ im Bereich außerhalb der Verkeilungsstrukturen 18, im erwähnten Querschnitt betrachtet, in radialer Richtung, alternativ zu dieser unter einem Winkel von bis zu 3°. Gemäß Fig. 7 definiert der Anschlussbereich des radial inneren Einschnittabschnittes $10^{III}$ an den mittlere Einschnittabschnitt $10^{II}$ ein auf die Einschnittmittelfläche $M_E$ bezogenes Tiefenniveau N, welches sich gegenüber der Laufstreifenperipherie in einer in radialer Richtung ermittelten konstanten Tiefe $T_N$ und vom Niveau der maximalen Tiefe $t_E$ in einem in radialer Richtung ermittelten Abstand $a_N$ befindet. Die Verkeilungsstrukturen 18 befinden sich daher radial innerhalb des Tiefenniveaus N, wobei die zugehörige Tiefe $T_N$ zumindest 20%, insbesondere zumindest 25%, bevorzugt zumindest 35%, der maximalen Tiefe $t_E$ beträgt.

Gemäß Fig. 4 und Fig. 7 sind die Verkeilungsstrukturen 18 jeweils von zwei einander gegenüberliegenden, korrespondierend ausgebildeten, durchgehend gekrümmten Wandabschnitten 19 der Einschnittwände 17a, 17b gebildet bzw. begrenzt. Außerhalb der Wandabschnitte 19 sind die Einschnittwände 17a, 17b unstrukturierte Flächen 17' (Fig. 4), also Flächen, welche frei von Vorsprüngen und/oder Vertiefungen sind. "Durchgehend gekrümmt" bedeutet, dass die Wandabschnitte 19 in ihrem Inneren frei von Knickstellen (Kanten) und Spitzen sind, sodass in jedem Punkt auf einem Wandabschnitt 19 eine Tangentialebene existiert. "Korrespondierend" bedeutet, dass die Breite $b_E$ des Einschnittes 10 im Bereich der Wandabschnitte 19 konstant ist oder fertigungsbedingt um höchstens 0,1 mm variiert. Beim gezeigten Ausführungsbeispiel sind die Wandabschnitte 19 ferner derart gestaltet, dass diese stetig ("knickfrei", "kantenfrei") in die unstrukturierten Flächen 17' übergehen. "Stetig übergehen" bedeutet, dass in jedem Punkt am Übergang eines Wandabschnittes 19 zur entsprechenden unstrukturierten Fläche 17' eine Tangentialebene existiert.

In Fig. 5 und Fig. 6 ist eine Achse $A_1$ eingezeichnet, welche - wie Fig. 5 zeigt - bei senkrechter Sicht auf die unstrukturierten Flächen 17' senkrecht zur Einschnittmittellinie $m_E$ sowie durch die Mitte der Einschnittmittellinie $m_E$ (fällt in Fig. 4 mit den Einschnittkanten 15a, 15b zusammen) verläuft und welche fernerwie Fig. 6 zeigt - im in Draufsicht senkrecht zur Einschnittmittellinie $m_E$ ausgerichteten Querschnitt betrachtet, im radial inneren Einschnittabschnitt $10^{III}$ mittig zwischen den unstrukturierten Flächen 17' verläuft.

Gemäß Fig. 5 befinden sich die Verkeilungsstrukturen 18 an unterschiedlichen Seiten der Achse $A_1$, sodass die eine Verkeilungsstruktur 18 in der einen Einschnitthälfte und die andere Verkeilungsstruktur 18 in der anderen Einschnitthälfte ausgebildet ist, wobei sich die Verkeilungsstrukturen 18 in übereinstimmenden Abständen zur Achse $A_1$ befinden. Die Verkeilungsstrukturen 18 sind derart ausgebildet, dass, unter Vernachlässigung des in Draufsicht gebogenen Verlaufes des Einschnittes 10, die Verkeilungsstrukturen 18 durch eine 180°-Drehung um die Achse $A_1$ ineinander überführbar sind (vergl. Fig. 4).

Wie Fig. 4 und Fig. 5 in Kombination zeigen, ist jede Verkeilungsstruktur 18 bei Sicht auf die Einschnittwände 17a, 17b kreissegmentförmig, insbesondere halbkreisförmig, wobei die Kreissehne der Laufstreifenperipherie zugewandt ist und parallel zur Laufstreifenperipherie (und somit parallel zu den Einschnittkanten 15a, 15b) verläuft und wobei der Kreisbogen dem Einschnittgrund 17c zugewandt ist. Die Verkeilungsstruktur 18 setzt sich aus einer U-förmig verlaufenden, ausgebauchten, äußeren Strukturzone $18^I$ und einer von dieser umlaufenen, zur äußeren Strukturzone $18^I$ entgegengesetzt und kuppelförmig ausgebauchten, inneren Strukturzone $18^{II}$ zusammen, wobei die freien Enden der U-Schenkel der äußeren Strukturzone $18^I$ zur Laufstreifenperipherie weisen. Bevorzugter Weise beginnen die äußere Strukturzone $18^I$ und die innere Strukturzone $18^{II}$ gemeinsam in einer in radialer Richtung ermittelten konstanten Tiefe.

Gemäß Fig. 5 weist jede Verkeilungsstruktur 18 eine in radialer Richtung und in Draufsicht (nicht gezeigt) senkrecht zur Einschnittmittellinie $m_E$ verlaufende Symmetrieebene $E_1$ auf. Wie Fig. 7 zeigt, weist die Verkeilungsstruktur 18, im in der Symmetrieebene $E_1$ liegenden Querschnitt betrachtet, entsprechend der erwähnten Gestalt der Strukturzonen $18^I$, $18^{II}$, einen S-förmig geschwungen Verlauf auf. Die Verkeilungsstruktur 18 endet, im in der Symmetrieebene $E_1$ liegenden Querschnitt sowie in parallel zur Symmetrieebene $E_1$ ausgerichteten Querschnittebenen betrachtet und jeweils bezogen auf die Einschnittmittelfläche $M_\varepsilon$, vor dem Tiefenniveau N in einem radialer Richtung ermittelten Abstand $a_1$ von zumindest 0,1 mm und weist zum Niveau des Einschnittgrundes 17c in radialer Richtung einen Abstand $a_2$ von zumindest 0,1 mm auf. Alternativ kann die Verkeilungsstruktur 18 bis zum Niveau des Einschnittgrundes 17c und/oder bis zum Tiefenniveau N reichen.

Die Verkeilungsstruktur 18 weist in der Symmetrieebene $E_1$ in radialer Richtung eine auf die Einschnittmittelfläche $M_\varepsilon$ bezogene Höhe hz von 35% bis 70%, insbesondere von 40% bis 65%, bevorzugt von 45% bis 60%, besonders bevorzugt von 50% bis 60%, der maximalen Tiefe $t_\varepsilon$ auf, wobei die Höhe hz beim Ausführungsbeispiel auf die Abstände $a_N$, $a_1$ und $a_2$ abgestimmt ist.

Wie Fig. 4 und Fig. 7 in Kombination zeigen, ist jede Strukturzone $18^I$, $18^{II}$ von einem gegenüber der jeweiligen unstrukturierten Fläche 17' (Fig. 4) von der einen Einschnittwand 17a, 17b abragenden Vorsprung $19^I$ (äußere Strukturzone $18^I$, Fig. 7), $19^{II}$ (innere Strukturzone $18^{II}$, Fig. 7) und einer gegenüber der unstrukturierten Fläche 17' der jeweils anderen, zweiten Einschnittwand 17a, 17b eingebuchteten, mit dem Vorsprung $19^I$, $19^{II}$ korrespondierenden Vertiefung gebildet. Entsprechend der erwähnten Form der Strukturzonen $18^I$, $18^{II}$ ist der Vorsprung $19^I$ U-förmig und der Vorsprung $19^{II}$ kuppelförmig, wobei sich der U-förmige Vorsprung $19^I$ an der einen Einschnittwand 17a, 17b und der kuppelförmige Vorsprung $19^{II}$ an der jeweils anderen Einschnittwand 17a bzw. 17b befindet und wobei der kuppelförmige Vorsprung $19^{II}$ in die U-Form des U-förmigen Vorsprung $19^I$ hineinragt. Der U-förmige Vorsprung $19^I$ ist somit gemeinsam mit der an derselben Einschnittwand 17a, 17b befindlichen Vertiefung, welche mit dem an der jeweils anderen Einschnittwand 17a bzw. 17b befindlichen kuppelförmigen Vorsprung $19^{II}$ korrespondiert, von einem der bereits erwähnten, durchgehend gekrümmten Wandabschnitte 19 begrenzt. In analoger Weise ist der kuppelförmige Vorsprung $19^{II}$ gemeinsam mit der an derselben Einschnittwand 16a, 16b befindlichen Vertiefung, welche mit dem an der jeweils anderen Einschnittwand 16a bzw. 16b befindlichen U-förmigen Vorsprung $19^I$ korrespondiert, von dem anderen durchgehend gekrümmten Wandabschnitt 19 begrenzt.

Wie Fig. 4 zu entnehmen ist, ist bei der näher zum einlaufenden Einschnittende 16a befindlichen Verkeilungsstruktur 18 der U-förmige Vorsprung $19^I$ (zu sehen ist die zugehörige äußere Strukturzone $18^I$) an der von der einlaufenden Einschnittkante 15a ausgehenden Einschnittwand 17a ausgebildet und bei der näher zum laufstreifenaußenseitigen Einschnittende 16b befindlichen Verkeilungsstruktur 18 ist der U-förmige Vorsprung $19^I$ (zu sehen ist die zugehörige äußere Strukturzone $18^I$) an der von der auslaufenden Einschnittkante 15b ausgehenden Einschnittwand 17b (nicht zu sehen) ausgebildet.

Wie Fig. 7 zeigt, verläuft die innere Strukturzone $18^{II}$, im in der Symmetrieebene $E_1$ liegenden Querschnitt betrachtet, bogenförmig, weist eine auf die Einschnittmittelfläche $M_\varepsilon$ bezogene, in radialer Richtung ermittelte Höhe $h^{II}$ von 55% bis 65% der Höhe hz der Verkeilungsstruktur 18 auf und definiert ein in einer in radialer Richtung ermittelten konstanten Tiefe durch ihre maximal ausgelenkte Stelle verlaufendes Niveau N*. Die innere Strukturzone $18^{II}$ ist somit, im in der Symmetrieebene $E_1$ liegenden Querschnitt betrachtet, am Niveau N* - bezogen auf die Einschnittmittelfläche $M_E$ und ermittelt senkrecht zum Niveau der an die innere Strukturzone $18^{II}$ angrenzenden unstrukturierten Flächen 17' (Fig. 4) der Einschnittwände 17a, 17b - am stärksten ausgelenkt. Das Niveau N*"teilt" die innere Strukturzone $18^{II}$ in einen radial äußeren Zonenteil $18^{II}$a und einen radial inneren Zonenteil $18^{11}$b. Der radial innere Zonenteil 18 b ist - jeweils gegenüber dem radial äußeren Zonenteil 18"a im in der Symmetrieebne $E_1$ liegenden Querschnitt betrachtet

und bezogen auf die Einschnittmittelfläche $M_E$ - schwächer gekrümmt und in radialer Richtung länger ausgeführt. Der radial innere Zonenteil $18^{11}b$ weist ferner, im erwähnten Querschnitt betrachtet, eine ausgehend vom Niveau N* in Richtung zum Einschnittgrund 17c progressiv zunehmende Krümmung auf, sodass die Krümmung zunächst nur wenig und dann auf stärkere Weise zunimmt. Der radial äußere Zonenteil 18"a weist, im erwähnten Querschnitt betrachtet, eine im Wesentlichen konstante Krümmung auf. Unter der "Krümmung" wird bekannter Weise der Kehrwert des Krümmungsradius verstanden, wobei der Krümmungsradius der Radius jenes Kreises ist, durch den im in der Symmetrieebne $E_1$ liegenden Querschnitt betrachtet, der jeweilige Punkt auf der Symmetrieebene $E_1$ am besten angenähert ist.

Gemäß Fig. 4 und Fig. 5 ist die äußere Strukturzone $18^l$ durch das Niveau N* (Fig. 7) in einen bei senkrechter Sicht auf die Einschnittwände 17a, 17b halbkreisförmig verlaufenden radial inneren Zonenteil $18^lb$ und zwei kurze in radialer Richtung verlaufende radial äußere Zonenteile $18^la$ geteilt. Der radial inneren Zonenteil $18^lb$ verläuft, im Querschnitt senkrecht zu seiner U-Form betrachtet, gleichbleibend kreisbogenförmig (siehe Fig. 4 in Kombination mit Fig. 7, radial innerer Zonenteil $18^lb$ in Fig. 7 nicht beziffert).

Die Verkeilungsstruktur 18 verläuft am Niveau N*, in Draufsicht auf das Niveau N* betrachtet (nicht gezeigt), in Form einer harmonischen Welle (vergl. Fig. 4) mit einer Wellenlänge und einer Amplitude, welche jeweils auf die Einschnittmittelfläche $M_\varepsilon$ bezogen sind, wobei die Verkeilungsstruktur 18 am Niveau N* gemäß der Gestalt ihrer Strukturzonen $18^l$, $18^{ll}$ über 1,5 Wellenlängen verläuft. Die Amplitude beträgt am Niveau N* 90% bis 200%, insbesondere 100% bis 150%, bevorzugt von 115% bis 135%, der Breite $b_E$ des Einschnittes 10 und die Wellenlänge beträgt am Niveau N* 500% bis 1000%, insbesondere 600% bis 800%, der Breite $b_E$ des Einschnittes 10.

Die Erfindung ist auf die beschriebenen Ausführungsbeispiele nicht beschränkt.

Die Einschnitte 10 können herkömmlich ausgeführt sein sowie ferner auch nur eine oder drei Verkeilungsstrukturen aufweisen. Anstelle der breiteren Einschnitte 11 können ebenfalls Einschnitte 10 bzw. herkömmlich ausgeführte Einschnitte vorgesehen sein. Bei den Einschnitten 10 sind die angehobenen, randseitigen Einschnittbereiche sowie der radial äußere Einschnittabschnitt $10^l$ und der mittlere Einschnittabschnitt $10^{ll}$ optional, sodass bei dieser Ausführung der Einschnitt 10, im Querschnitt und in radialer Richtung betrachtet, keine Einschnittabschnitte aufweist bzw. lediglich aus einem einzigen "Einschnittabschnitt" gebildet ist. Die Einschnitte 10, 11 verlaufen in Draufsicht vorzugsweise zumindest über den Großteil ihrer Länge, besonders bevorzugt über ihre gesamte Länge, gerade oder durchgehend gebogen (kreisbogenförmig), wobei sich die Verkeilungsstruktur(en) insbesondere im gerade bzw. gebogen verlaufenden Abschnitt befinden. Im Rahmen der gegenständlichen Erfindung werden unter "in schulterseitigen Profilblöcken ausgebildeten, durchquerende Einschnitten 10, 11" Einschnitte verstanden, welche die schulterseitigen Profilblöcken zumindest innerhalb der Bodenaufstandsfläche durchqueren, wobei die Bodenaufstandsfläche dem statisch ermittelten Footprint gemäß E.T.R.T.O.-Standards entspricht (Last bei 70% der maximalen Tragfähigkeit bei einem Innendruck von 85% nach E.T.R.T.O.-Norm). Die Schrägrillen können laufstreifeninnenseitig auch ineinander einmünden.

Bezugszeichenliste

| | |
|---|---|
| 1 | schulterseitige Profilblockreihe |
| 1a | schulterseitiger Profilblock |
| 2 | halbmittige Profilblockreihe |
| 2a | halbmittiger Profilblock |
| 3 | Schrägrille |
| 3a, 3b | Schrägrillenabschnitt |
| 4 | schmale Rille |
| 5 | Kurzrille |
| 6 | mittige Profilblock |
| 7 | Umfangsrille |
| 8 | mittige Profilrippe |
| 9 | Kurzrille |
| 10 | Einschnitt |
| $10^l$ | radial äußerer Einschnittabschnitt |
| $10^{ll}$ | radial mittlerer Einschnittabschnitt |
| $10^{lll}$ | radial innerer Einschnittabschnitt |
| 10a | laufstreifenaußenseitiger Einschnittabschnitt |
| 10b | laufstreifeninnenseitiger Einschnittabschnitt |
| 11 | Einschnitt |
| 12 | mittige Profilrippe |
| 13 | Umfangsrille |

| | |
|---|---|
| 14 | Sackrille |
| 15a | einlaufende Einschnittkante |
| 15b | auslaufende Einschnittkante |
| 16a | einlaufendes Einschnittende |
| 16b | auslaufendes Einschnittende |
| 17a, 17b | Einschnittwand |
| 17c | Einschnittgrund |
| 17' | unstrukturierte Fläche |
| 18 | Verkeilungsstruktur |
| $18^I$ | äußere Strukturzone |
| $18^I a$ | radial äußerer Zonenteil |
| $18^I b$ | radial innerer Zonenteil |
| $18^{II}$ | innere Strukturzone |
| $18^I a$ | radial äußerer Zonenteil |
| $18^{II} b$ | radial innerer Zonenteil |
| 19 | Wandabschnitt |
| $19^I$, $19^{II}$ | Vorsprung |
| A-A | Linie (Reifenäquatorialebene) |
| $A_1$ | Achse |
| $a_1$, $a_2$, $a_N$ | Abstand |
| $b_E$, $b_E$', $b_{SR}$, $b_{UR}$ | Breite |
| $b_{PR}$. | maximale Breite |
| $c_E$ | projizierte Länge |
| $c_L$, $c_M$, $c_S$ | Umfangslänge |
| $c^I$ | Länge |
| $d_E$ | Länge |
| $E_1$ | Symmetrieebene |
| $h^{II}$, $h_Z$ | Höhe |
| L | Pitch |
| $m_E$ | Einschnittmittellinie |
| M | Pitch |
| $M_E$ | Einschnittmittelebene |
| $m_{SR}$ | Rillenmittellinie |
| N | Tiefenniveau |
| N* | Niveau |
| P | Pfeil (Abrollrichtung) |
| S | Pitch |
| $S_5$ | Pfeil (Sichtrichtung) |
| $t_E$ | maximale Tiefe |
| $T_N$ | Tiefe |
| Z | zentraler Profilpositivbereich |
| $\alpha$, $\beta$, $\gamma$, $\delta$ | Winkel |

## Patentansprüche

1. Fahrzeugluftreifen mit einem laufrichtungsgebunden ausgeführten Laufstreifen mit V-förmig über die Laufstreifenbreite zueinander verlaufenden Schrägrillen (3), schulterseitigen Profilblockreihen (1) mit schulterseitigen Profilblöcken (1a), zwei halbmittigen Profilblockreihen (2) mit halbmittigen Profilblöcken (2a) und einem zentralen Profilpositivbereich (Z) aus

    a) Profilblöcken (6) oder
    b) einer Profilrippe (8),
    wobei sich der Laufstreifen über seinen Umfang aus 50 bis 60 Pitches (L, M, S) zusammensetzt und wobei sich in jedem Pitch (L, M, S) ein schulterseitiger Profilblock (1a) aus jeder schulterseitigen Profilblockreihe (1), ein halbmittiger Profilblock (2a) aus jeder halbmittigen Profilblockreihe (2) und ein Abschnitt des zentralen Profilpositivbereiches (Z) befindet, wobei sämtliche Profilblöcke (1a, 2a, 6) jeweils mit zumindest einem oder mehreren parallel zueinander verlaufenden Einschnitt(en) (10, 11) und die gegebenenfalls vorgesehene Profilrippe (8) mit mehreren parallel zueinander verlaufenden Einschnitt(en) (10, 11) versehen ist bzw. sind, wobei die Einschnitte (10, 11) eine Breite ($b_E$, $b_E'$) von 0,4 mm bis 2,0 mm und eine maximale Tiefe ($t_E$) von zumindest 3,0 mm und höchstens 100% der Profiltiefe aufweisen, wobei folgende Beziehungen gelten:

$$E_Z > E_{HB} \quad \text{Beziehung 1}$$

$$E_Z > E_S \quad \text{Beziehung 2}$$

wobei

$E_Z$ die Anzahl der Einschnitte (10) im zentralen Profilpositivbereich (Z),
$E_{HB}$ die Anzahl der Einschnitte (10) in jeder einzelnen halbmittigen Profilblockreihe (2) und
$E_S$ die Anzahl der Einschnitte (10, 11) in jeder einzelnen schulterseitigen Profilblockreihe (1) ist,
**dadurch gekennzeichnet,**
**dass** die Pitches (L, M, S) eine mittlere Umfangslänge von 33,0 mm bis 40,0 mm aufweisen, die Einschnitte (10) in den halbmittigen Profilblöcken (2a) in Draufsicht parallel zu den Schrägrillen (3) verlaufen, bei Variante a) die Einschnitte (10) in den Profilblöcken (6) in Draufsicht parallel zu den Rillenmittellinien ($M_{SR}$) der Schrägrillen (3) verlaufen und bei Variante b) die Einschnitte (10) in der Profilrippe (8) in Draufsicht parallel zueinander verlaufen, wobei für Variante a) und b) folgende Beziehung gilt:

$$E_{Z,\text{Mittel}} = E_Z / PB_S = 2,0 \text{ bis } 4,0 \quad \text{Beziehung 4}$$

wobei
$PB_S$ die Anzahl der schulterseitigen Profilblöcke (1a) jeder einzelnen schulterseitigen Profilblockreihe (1) ist.

2. Fahrzeugluftreifen mit einem laufrichtungsgebunden ausgeführten Laufstreifen mit V-förmig über die Laufstreifenbreite zueinander verlaufenden Schrägrillen (3), schulterseitigen Profilblockreihen (1) mit schulterseitigen Profilblöcken (1a), zwei halbmittigen Profilblockreihen (2) mit halbmittigen Profilblöcken (2a) und einem zentralen Profilpositivbereich (Z),

wobei sich der Laufstreifen über seinen Umfang aus 50 bis 60 Pitches (L, M, S) zusammensetzt und sich in jedem Pitch (L, M, S) ein schulterseitiger Profilblock (1a) aus jeder schulterseitigen Profilblockreihe (1), ein halbmittiger Profilblock (2a) aus jeder halbmittigen Profilblockreihe (2) und ein Abschnitt des zentralen Profilpositivbereiches (Z) befindet, wobei sämtliche Profilblöcke (1a, 2a, 6) jeweils mit zumindest einem oder mehreren parallel zueinander verlaufenden Einschnitten (10, 11) und der zentrale Profilpositivbereich (Z) mit parallel zueinander verlaufenden Einschnitten (10, 11) versehen ist bzw. sind, wobei die Einschnitte (10, 11) eine Breite ($b_E$, $b_E'$) von 0,4 mm bis 2,0 mm und eine maximale Tiefe ($t_E$) von zumindest 3,0 mm und höchstens 100% der Profiltiefe aufweisen, **dadurch gekennzeichnet,** **dass** die Pitches (L, M, S) eine mittlere Umfangslänge von 33,0 mm bis 40,0 mm aufweisen, der zentrale Profilpositivbereich (Z) aus einer Profilrippe (12) gebildet ist, die Einschnitte (10) in den halbmittigen Profilblöcken (2a) in Draufsicht parallel zu den Schrägrillen (3) verlaufen und die Einschnitte (10) in der Profilrippe (12) V-förmig zueinander verlaufend ineinander einmünden, wobei folgende Beziehungen gelten:

$$E_Z^* > E_{HB} \quad \text{Beziehung 1*}$$

$$E_Z^* > E_S \quad \text{Beziehung 2*}$$

$$E_Z^* = \sum C_E / b_{BR} \quad \text{Beziehung 7}$$

$$E_{Z,\text{Mittel}} = E_Z^* / PB_S = 2,0 \text{ bis } 4,0 \quad \text{Beziehung 4*}$$

wobei

$E_{HB}$ die Anzahl der Einschnitte (10) in jeder einzelnen halbmittigen Profilblockreihe (2),
Es die Anzahl der Einschnitte (10, 11) in jeder einzelnen schulterseitigen Profilblockreihe (1),
$\Sigma c_E$ die Summe der in die axiale Richtung projizierten Längen ($c_E$) sämtlicher Einschnitte (10) in der Profilrippe (12),
$E_Z^*$ eine errechnete, fiktive Anzahl von die Profilrippe (12) durchquerenden Einschnitten (10),
$b_{BR}$ die in axialer Richtung ermittelte, maximale Breite der Profilrippe (12) und
PBs die Anzahl der schulterseitigen Profilblöcke (1a) jeder einzelnen schulterseitigen Profilblockreihe (1) ist.

3. Fahrzeugluftreifen nach Anspruch 1 oder 2, **dadurch gekennzeichnet, dass** folgende Beziehung gilt:

$$E_S > E_{HB} \qquad \text{Beziehung 3}$$

wobei

$E_{HB}$ die Anzahl der Einschnitte (10) in jeder einzelnen halbmittigen Profilblockreihe (2) und
Es die Anzahl der Einschnitte (10, 11) in jeder einzelnen schulterseitigen Profilblockreihe (1) ist.

4. Fahrzeugluftreifen nach einem der Ansprüche 1 bis 3, **dadurch gekennzeichnet, dass** folgende Beziehung gilt:

$$E_{S,Mittel} = E_S / PB_S = 2{,}2 \text{ bis } 2{,}8 \qquad \text{Beziehung 5}$$

wobei

Es die Anzahl der Einschnitte (10, 11) in jeder einzelnen schulterseitigen Profilblockreihe (1) und
PBs die Anzahl der schulterseitigen Profilblöcke (1a) jeder einzelnen schulterseitigen Profilblockreihe (1) ist.

5. Fahrzeugluftreifen nach einem der Ansprüche 1 bis 4, **dadurch gekennzeichnet, dass** folgende Beziehung gilt:

$$E_{HB,Mittel} = E_{HB} / PB_S = 1{,}2 \text{ bis } 2{,}0 \qquad \text{Beziehung 6}$$

wobei

$E_{HB}$ die Anzahl der Einschnitte (10) in jeder einzelnen halbmittigen Profilblockreihe (2) und
PBs die Anzahl der schulterseitigen Profilblöcke (1a) jeder einzelnen schulterseitigen Profilblockreihe (1) ist.

6. Fahrzeugluftreifen nach einem der Ansprüche 1 bis 5, **dadurch gekennzeichnet, dass** folgende Beziehung gilt:
$E_{Z,Mittel}$ = 2,2 bis 3,8, bevorzugt 2,4 bis 3,6

7. Fahrzeugluftreifen nach einem der Ansprüche 1 bis 6, **dadurch gekennzeichnet, dass** jeweils in Pitches (S) mit der kleinsten Umfangslänge (cs) in jedem halbmittigen Profilblock (2a) genau ein Einschnitt (10) ausgebildet ist und jedem schulterseitigen Profilblock (1a) zwei Einschnitte (10) ausgebildet sind.

8. Fahrzeugluftreifen nach einem der Ansprüche 1 bis 7, **dadurch gekennzeichnet, dass** jeweils in Pitches (L) mit der größten Umfangslänge ($c_L$) in jedem halbmittigen Profilblock (2a) zwei Einschnitte (10) und in jedem schulterseitigen Profilblock (1a) drei Einschnitte (10, 11) ausgebildet sind.

9. Fahrzeugluftreifen nach einem der Ansprüche 1 bis 8, **dadurch gekennzeichnet, dass** zu den Einschnitten (10) Einschnitte (10) gehören, welche eine maximale Tiefe ($t_E$) von 70% bis 100% der Profiltiefe, einen Einschnittgrund (17c) und zwei Einschnittwände (17a, 17b) mit zumindest einer zur Laufstreifenperipherie beabstandeten lokalen Verkeilungsstruktur (18) aufweisen, wobei die Verkeilungsstruktur (18) durch zwei einander gegenüberliegende, korrespondierende, durchgehend gekrümmte Wandabschnitte (19) der Einschnittwände (17a, 17b) gebildet ist und wobei unstrukturierte Flächen (17') der Einschnittwände (17a, 17b) an die durchgehend gekrümmten Wandabschnitte (19) angrenzen, wobei die Verkeilungsstruktur (18) kreissegmentförmig, insbesondere halbkreisförmig, ausgeführt ist und sich aus einer kuppelförmig ausgebauchten, inneren Strukturzone (18$^{II}$) und einer diese U-förmig umlaufenden, entgegengesetzt zur inneren Strukturzone (18$^{II}$) ausgebauchten, äußeren Strukturzone (18$^{I}$) mit zur Laufstreifenperipherie weisenden U-Schenkel zusammensetzt, sodass der durchgehend gekrümmte Wandabschnitt (19) der einen Einschnittwand (17a, 17b) einen U-förmigen Vorsprung (19$^{I}$) und der durchgehend gekrümmte Wandabschnitt (19) der anderen Einschnittwand (17a, 17b) einen in den U-förmigen Vorsprung (19$^{I}$) hineinragenden kuppelförmigen Vorsprung (19$^{I}$) mitbegrenzt.

**Claims**

1. Pneumatic vehicle tyre with a tread of directional design, having oblique grooves (3) which run towards one another over the tread width in a V-shaped manner, having shoulder-side profile-block rows (1) with shoulder-side profile blocks (1a), having two semi-central profile-block rows (2) with semi-central profile blocks (2a), and having a central profile-positive region (Z) comprising

   a) profile blocks (6) or
   b) a profile rib (8),
   wherein the tread is made up of 50 to 60 pitches (L, M, S) over its circumference, and wherein each pitch (L, M, S) contains a shoulder-side profile block (1a) from each shoulder-side profile-block row (1), a semi-central profile block (2a) from each semi-central profile-block row (2) and a portion of the central profile-positive region (Z), wherein all of the profile blocks (1a, 2a, 6) are respectively provided with at least one or multiple parallel sipe(s) (10, 11), and the profile rib (8), if provided, is provided with multiple parallel sipes (10, 11), wherein the sipes (10, 11) have a width ($b_E$, $b_E$') of 0.4 mm to 2.0 mm and a maximum depth ($t_E$) of at least 3.0 mm and at most 100% of the profile depth, wherein the following relationships hold true:

$$E_Z > E_{HB} \quad \text{relationship 1}$$

$$E_Z > E_S \quad \text{relationship 2}$$

   where

   $E_Z$ is the number of sipes (10) in the central profile-positive region (Z),
   $E_{HB}$ is the number of sipes (10) in each individual semi-central profile-block row (2), and
   $E_S$ is the number of sipes (10, 11) in each individual shoulder-side profile-block row (1),
   **characterized**
   **in that** the pitches (L, M, S) have an average circumferential length of 33.0 mm to 40.0 mm, the sipes (10) in the semi-central profile blocks (2a), in plan view, run parallel to the oblique grooves (3),
   in variant a), the sipes (10) in the profile blocks (6), in plan view, run parallel to the groove mid-lines ($M_{SR}$) of the oblique grooves (3), and
   in variant b), the sipes (10) in the profile rib (8), in plan view, run parallel to one another, wherein the following relationship holds true for variants a) and b):

$$E_{Z,average} = E_Z / PB_S = 2.0 \text{ to } 4.0 \quad \text{relationship 4}$$

   where
   $PB_S$ is the number of shoulder-side profile blocks (1a) of each individual shoulder-side profile-block row (1).

2. Pneumatic vehicle tyre with a tread of directional design, having oblique grooves (3) which run towards one another over the tread width in a V-shaped manner, having shoulder-side profile-block rows (1) with shoulder-side profile blocks (1a), having two semi-central profile-block rows (2) with semi-central profile blocks (2a), and having a central profile-positive region (Z),

   wherein the tread is made up of 50 to 60 pitches (L, M, S) over its circumference, and each pitch (L, M, S) contains a shoulder-side profile block (1a) from each shoulder-side profile-block row (1), a semi-central profile block (2a) from each semi-central profile-block row (2) and a portion of the central profile-positive region (Z), wherein all of the profile blocks (1a, 2a, 6) are respectively provided with at least one or multiple parallel sipe(s) (10, 11), and the central profile-positive region (Z) is provided with parallel sipes (10, 11), wherein the sipes (10, 11) have a width ($b_E$, $b_E'$) of 0.4 mm to 2.0 mm and a maximum depth ($t_E$) of at least 3.0 mm and at most 100% of the profile depth,

**characterized**

**in that** the pitches (L, M, S) have an average circumferential length of 33.0 mm to 40.0 mm, the central profile-positive region (Z) is formed from a profile rib (12), the sipes (10) in the semi-central profile blocks (2a), in plan view, run parallel to the oblique grooves (3), and the sipes (10) in the profile rib (12) open out into one another so as to run in a V-shaped manner in relation to one another, wherein the following relationships hold true:

$$E_Z^* > E_{HB} \quad \text{relationship 1*}$$

$$E_Z^* > E_S \quad \text{relationship 2*}$$

$$E_Z^* = \textstyle\sum c_E \,/\, b_{BR} \quad \text{relationship 7}$$

$$E_{Z,average} = E_Z^* \,/\, PB_S = 2.0 \text{ to } 4.0 \quad \text{relationship 4*}$$

where

$E_{HB}$ is the number of sipes (10) in each individual semi-central profile-block row (2),

$E_S$ is the number of sipes (10, 11) in each individual shoulder-side profile-block row (1),

$\Sigma c_E$ is the sum of lengths ($c_E$) projected in the axial direction of all of the sipes (10) in the profile rib (12),

$E_Z^*$ is a calculated fictitious number of sipes (10) crossing through the profile rib (12),

$b_{BR}$ is the maximum width, determined in the axial direction, of the profile rib (12),

and PBs is the number of shoulder-side profile blocks (1a) of each individual shoulder-side profile-block row (1).

3. Pneumatic vehicle tyre according to Claim 1 or 2, **characterized in that** the following relationship holds true:

$$E_S > E_{HB} \quad \text{relationship 3}$$

where

$E_{HB}$ is the number of sipes (10) in each individual semi-central profile-block row (2), and

$E_S$ is the number of sipes (10, 11) in each individual shoulder-side profile-block row (1).

4. Pneumatic vehicle tyre according to one of Claims 1 to 3, **characterized in that** the following relationship holds true:

$$E_{S,average} = E_S \,/\, PB_S = 2.2 \text{ to } 2.8 \quad \text{relationship 5}$$

where

$E_S$ is the number of sipes (10, 11) in each individual shoulder-side profile-block row (1), and

PBs is the number of shoulder-side profile blocks (1a) of each individual shoulder-side profile-block row (1).

5. Pneumatic vehicle tyre according to one of Claims 1 to 4, **characterized in that** the following relationship holds true:

$$E_{HB,average} = E_{HB} \,/\, PB_S = 1.2 \text{ to } 2.0 \quad \text{relationship 6}$$

where

$E_{HB}$ is the number of sipes (10) in each individual semi-central profile-block row (2), and

PBs is the number of shoulder-side profile blocks (1a) of each individual shoulder-side profile-block row (1).

**6.** Pneumatic vehicle tyre according to one of Claims 1 to 5, **characterized in that** the following relationship holds true: $E_{Z,average}$ = 2.2 to 3.8, preferably 2.4 to 3.6.

**7.** Pneumatic vehicle tyre according to one of Claims 1 to 6, **characterized in that**, in each case in pitches (S) with the smallest circumferential length (cs), exactly one sipe (10) is formed in each semi-central profile block (2a) and two sipes (10) are formed in each shoulder-side profile block (1a).

**8.** Pneumatic vehicle tyre according to one of Claims 1 to 7, **characterized in that**, in each case in pitches (L) with the greatest circumferential length ($c_L$), two sipes (10) are formed in each semi-central profile block (2a), and three sipes (10, 11) are formed in each shoulder-side profile block (1a).

**9.** Pneumatic vehicle tyre according to one of Claims 1 to 8, **characterized in that** the sipes (10) include sipes (10) which have a maximum depth ($t_E$) of 70% to 100% of the profile depth, have a sipe base (17c) and have two sipe walls (17a, 17b) with at least one local wedging structure (18) which is spaced apart from the tread periphery, wherein the wedging structure (18) is formed by two mutually oppositely situated corresponding continuously curved wall portions (19) of the sipe walls (17a, 17b), and wherein unstructured surfaces (17') of the sipe walls (17a, 17b) adjoin the continuously curved wall portions (19), wherein the wedging structure (18) is of circular-segment-shaped, in particular semicircular, form and is composed of an inner structure zone ($18^{II}$), which is bulged in the shape of a dome, and of an outer structure zone ($18^I$), which is bulged oppositely to the inner structure zone ($18^{II}$) and runs around the latter in a U-shaped manner and has U-legs pointing towards the tread periphery, so that the continuously curved wall portion (19) of the one sipe wall (17a, 17b) delimits a U-shaped projection ($19^I$) and the continuously curved wall portion (19) of the other sipe wall (17a, 17b) delimits a dome-shaped projection ($19^I$) which projects into the U-shaped projection ($19^I$).

**Revendications**

**1.** Pneumatique pour véhicule, comportant une bande de roulement directionnelle avec des rainures obliques (3) en forme de V s'étendant les unes par rapport aux autres sur la largeur de la bande de roulement, des rangées de blocs profilés (1) côté épaulement avec des blocs profilés (1a) côté épaulement, deux rangées de blocs profilés (2) semi-centrales avec des blocs profilés (2a) semi-centraux et une zone positive profilée (Z) centrale composée

a) de blocs profilés (6) ou
b) d'une nervure profilée (8),
la bande de roulement se composant sur sa circonférence de 50 à 60 pas (L, M, S) et dans chaque pas (L, M, S) se trouvant un bloc profilé (1a) côté épaulement de chaque rangée de blocs profilés (1) côté épaulement, un bloc profilé semi-central (2a) de chaque rangée (2) de blocs profilés semi-centrale et une partie de la zone positive profilée centrale (Z), tous les blocs profilés (1a, 2a, 6) étant respectivement pourvus d'au moins une ou plusieurs entailles (10, 11) s'étendant parallèlement les unes aux autres et la nervure profilée (8) optionnellement prévue étant pourvue de plusieurs entailles (10, 11) s'étendant parallèlement les unes aux autres, les entailles (10, 11) présentant une largeur ($b_E$, $b_E'$) allant de 0,4 mm à 2,0 mm et une profondeur maximale ($t_E$) d'au moins 3,0 mm et d'au plus 100% de la profondeur du profilé, les relations suivantes s'appliquant :

$$E_Z > E_{HB} \qquad \text{relation 1}$$

$$E_Z > E_S \qquad \text{relation 2}$$

dans lesquelles

Ez est le nombre d'entailles (10) dans la zone positive profilée centrale (Z),
$E_{HB}$ est le nombre d'entailles (10) dans chaque rangée de blocs profilés semi-centraux (2), et
Es est le nombre d'entailles (10, 11) dans chaque rangée individuelle de blocs profilés (1) côté épaulement,
**caractérisé**
**en ce que** les pas (L, M, S) ont une longueur circonférentielle moyenne allant de 33,0 mm à 40,0 mm, les entailles (10) dans les blocs profilés semi-centraux (2a) s'étendent, en vue de dessus, parallèlement aux rainures obliques (3),

dans la variante a), les entailles (10) dans les blocs profilés (6) sont parallèles, en vue de dessus, aux lignes centrales des rainures ($M_{SR}$) des rainures obliques (3) et

dans la variante b), les entailles (10) dans la nervure profilée (8) sont parallèles entre elles en vue de dessus, la relation suivante étant valable pour les variantes a) et b) :

$$E_{Z,moyenne} = E_Z / PB_S = 2,0 \text{ à } 4,0 \quad \text{relation 4}$$

dans laquelle

PBs est le nombre de blocs profilés (1a) côté épaulement de chaque rangée individuelle de blocs profilés (1) côté épaulement.

**2.** Pneumatique pour véhicule comportant une bande de roulement directionnelle avec des rainures obliques (3) en forme de V s'étendant les unes par rapport aux autres sur la largeur de la bande de roulement, des rangées de blocs profilés (1) côté épaulement avec des blocs profilés (1a) côté épaulement, deux rangées de blocs profilés (2) semi-centrales avec des blocs profilés (2a) semi-centraux et une zone positive profilée (Z) centrale,

la bande de roulement se composant sur sa circonférence de 50 à 60 pas (L, M, S) et dans chaque pas (L, M, S) se trouvant un bloc profilé (1a) côté épaulement de chaque rangée de blocs profilés (1) côté épaulement, un bloc profilé semi-central (2a) de chaque rangée (2) de blocs profilés semi-centrale et une partie de la zone positive profilée centrale (Z), tous les blocs profilés (1a, 2a, 6) étant respectivement pourvus d'au moins une ou plusieurs entailles (10, 11) s'étendant parallèlement les unes aux autres et la zone positive profilée centrale (Z) étant pourvue d'entailles (10, 11) s'étendant parallèlement les unes aux autres, les entailles (10, 11) présentant une largeur ($b_E$, $b_E'$) allant de 0,4 mm à 2,0 mm et une profondeur maximale ($t_E$) d'au moins 3,0 mm et au maximum de 100% de la profondeur du profil,
**caractérisé**
**en ce que** les pas (L, M, S) présentent une longueur circonférentielle moyenne allant de 33,0 mm à 40,0 mm, la zone positive profilée centrale (Z) est formée d'une nervure profilée (12), les entailles (10) dans les blocs profilés semi-centraux (2a) s'étendent, en vue de dessus, parallèlement aux rainures obliques (3) et les entailles (10) dans la nervure profilée (12) débouchent les unes dans les autres en s'étendant en forme de V, les relations suivantes étant valables :

$$E_Z^* > E_{HB} \quad \text{relation 1*}$$

$$E_Z^* > E_S \quad \text{relation 2*}$$

$$E_Z^* = \sum C_E / b_{BR} \quad \text{relation 7}$$

$$E_{Z,moyenne} = E_Z^* / PB_S = 2,0 \text{ à } 4,0 \quad \text{relation 4*}$$

dans laquelle

$E_{HB}$ est le nombre d'entailles (10) dans chaque rangée individuelle de blocs profilés semi-centraux (2),
Es est le nombre d'entailles (10, 11) dans chaque rangée individuelle de blocs profilés (1) côté épaulement,
$\Sigma c_E$ est la somme des longueurs ($c_E$) projetées dans la direction axiale de toutes les entailles (10) dans la nervure profilée (12),
Ez* est un nombre fictif calculé d'entailles (10) traversant la nervure profilée (12), $b_{BR}$ est la largeur maximale, calculée dans le sens axial, de la nervure profilée (12)
et PBs est le nombre de blocs profilés (1a) côté épaulement de chaque rangée individuelle de blocs profilés (1) côté épaulement.

**3.** Pneumatique pour véhicule selon la revendication 1 ou la revendication 2, **caractérisé en ce que** la relation suivante s'applique :

$$E_S > E_{HB} \quad \text{relation 3}$$

dans laquelle

$E_{HB}$ est le nombre d'entailles (10) dans chaque rangée de blocs profilés semi-centraux (2), et
Es est le nombre d'entailles (10, 11) dans chaque rangée individuelle de blocs profilés (1) côté épaulement.

4. Pneumatique pour véhicule selon l'une des revendications 1 à 3, **caractérisé en ce que** la relation suivante s'applique :

$$E_{S,\text{Moyenne}} = E_S / PB_S = 2{,}2 \text{ à } 2{,}8 \quad \text{relation 5}$$

dans laquelle

Es est le nombre d'entailles (10, 11) dans chaque rangée individuelle de blocs profilés (1) côté épaulement, et
PBs est le nombre de blocs profilés (1a) côté épaulement de chaque rangée individuelle de blocs profilés (1) côté épaulement.

5. Pneumatique pour véhicule selon l'une des revendications 1 à 4, **caractérisé en ce que** la relation suivante s'applique :

$$E_{HB,\text{Moyenne}} = E_{HB} / PB_S = 1{,}2 \text{ à } 2{,}0 \, \text{relation 6}$$

dans laquelle

$E_{HB}$ est le nombre d'entailles (10) dans chaque rangée de blocs profilés semi-centraux (2), et
PBs est le nombre de blocs profilés (1a) côté épaulement de chaque rangée individuelle de blocs profilés (1) côté épaulement.

6. Pneumatique pour véhicule selon l'une des revendications 1 à 5, **caractérisé en ce que** la relation suivante s'applique :
$E_{Z,\text{Moyenne}}$ = de 2,2 à 3,8, de préférence, de 2,4 à 3,6.

7. Pneumatique pour véhicule selon l'une des revendications 1 à 6, **caractérisé en ce qu'**à chaque fois dans des pas (S) avec la plus petite longueur circonférentielle (Cs), exactement une entaille (10) est réalisée dans chaque bloc profilé semi-central (2a) et deux entailles (10) sont réalisées dans chaque bloc profilé (1a) côté épaulement.

8. Pneumatique pour véhicule selon l'une des revendications 1 à 7, **caractérisé en ce que** deux entailles (10) sont formées dans chaque bloc profilé semi-central (2a) dans les pas (L) ayant la plus grande longueur circonférentielle ($c_L$) et trois entailles (10, 11) sont formées dans chaque bloc profilé (1a) côté épaulement.

9. Pneumatique de véhicule selon l'une des revendications 1 à 8, **caractérisé en ce que** les entailles (10) comprennent des entailles (10) qui présentent une profondeur maximale ($t_E$) allant de 70% à 100% de la profondeur du profilé, un fond d'entaille (17c) et deux parois d'entaille (17a, 17b) avec au moins une structure de calage locale (18) espacée de la périphérie de la bande de roulement, la structure de calage (18) étant formée par deux parties de paroi (19) opposées l'une à l'autre, correspondantes et courbées en continu des parois d'entaille (17a, 17b), et des surfaces non structurées (17') des parois d'entaille (17a, 17b) étant adjacentes aux parties de paroi (19) courbées en continu, la structure de calage (18) étant réalisée en forme de segment de cercle, en particulier en forme de demi-cercle, et se composant d'une zone de structure intérieure ($18^{II}$) bombée en forme de coupole et d'une zone de structure extérieure ($18^I$) entourant celle-ci en forme de U, bombée à l'opposé de la zone de structure intérieure ($18^{II}$), avec des branches de U orientées vers la périphérie de la bande de roulement, de sorte que la section de paroi (19) courbée en continu de l'une des parois d'entaille (17a, 17b) délimite une saillie ($19^I$) en forme de U et que la section de paroi (19) courbée en continu de l'autre paroi d'entaille (17a, 17b) délimite également une saillie (19$^I$) en forme de coupole pénétrant dans la saillie (19$^I$) en forme de U.

Fig. 1

Fig. 2

Fig. 3

Fig. 4

Fig. 5: Sicht $S_5$

Fig. 6: VI-VI

Fig. 7: VII-VII

24

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2965925 A1
- US 2017129289 A1
- JP 2002264612 A
- DE 102016217970 A1
- DE 102019131570 A1